# EUROPEAN PATENT APPLICATION

(11) **EP 4 431 274 A1**
(43) Date of publication of application: **18.09.2024**
(21) Application number: 23163916.2
(22) Date of filing: 24.03.2023
(51) Int. Cl.: B32B 27/06, B32B 5/18, B32B 5/32, B32B 7/12, B32B 27/08, B32B 27/20, B32B 27/22, B32B 27/30, E04F 15/10

(54) **DECORATIVE PANEL AND METHOD FOR MANUFACTURING DECORATIVE PANELS**

(30) Priority: 14.03.2023 US 202363490011 P
(71) Applicant: Unilin, BV, 8710 Wielsbeke (BE)
(72) Inventor: BOSSUYT, Jochen, 8710 Wielsbeke (BE); NAEYAERT, Christophe, 8710 Wielsbeke (BE); VAN VLASSENRODE, Kristof, 8710 Wielsbeke (BE); TANGHE, Kevin, 8710 Wielsbeke (BE); SPRIET, Wim, 8710 Wielsbeke (BE)
(74) Representative: Unilin Technologies

(57) **Abstract**

Decorative panel comprising at least a substrate (8) and a provided thereon decorative top layer (9), characterized in that said substrate (8) comprises at least one foamed layer and at least one layer of plasticized polyvinyl chloride.

## Description

The present invention relates to a decorative panel, and to a method for manufacturing such decorative panels. In particular, the invention relates to such panels that can be assembled to form a covering, such a, preferably floating, floor covering.

Decorative panels for forming a floating floor covering are for example known from EP 1 938 963. The panels of EP'963 comprise a layer of plasticized polyvinyl chloride forming the substrate of the floor panel. Such floor panels have a good water resistance and create an acceptable walking noise. They can however be relatively heavy and be prone to deformation due to e.g. unevenness of the subfloor.

EP 3 405 346 discloses floor panels comprising a substrate of a high density plastic composite. Such floor panels may be less prone to deformation due to unevenness of the subfloor, but give rise to a less acceptable walking noise. The floor panels have a good water resistance, but are relatively heavy.

EP 3 115 194 discloses floor panels comprising a substrate of a foamed synthetic material board, and a glued thereon decorative top layer. The manufacturing of such floor panels may be cumbersome.

In order to optimize the locking strength of floor panels having mechanical coupling means, WO 2019/107393, proposes floor panels comprising a substrate with two layers of coextruded composite thermoplastic material having each a different composition, in particular such that the layers have a different flexibility. The WO `393 however does not address potential issues with walking noise and weight of the obtained panels.

The present invention, in the first place, seeks to offer an alternative decorative panel, wherein in accordance with preferred embodiments a solution is offered to one or more of the problems of the decorative panels of the state-of-the-art.

With this aim, the present invention in accordance with its first independent aspect, is a decorative panel comprising at least a substrate and a provided thereon decorative top layer, with as a characteristic that said substrate comprises at least one foamed layer and at least one layer of plasticized polyvinyl chloride. The presence of at least one foamed layer and at least one plasticized polyvinyl chloride layer provides a substrate that may be light, sound-absorbing, water-resistant and can be straightforwardly thermally laminated with e.g. at least a printed thermoplastic foil.

According to a preferred embodiment, such plasticized polyvinylchloride layer forms the outer surface of said substrate, and is preferably directly adjacent to a portion of the decorative top layer, for example directly adjacent to a printed thermoplastic foil, e.g. a printed PVC foil. In such case a remarkably good thermal lamination may be obtained.

It is noted that a plasticized polyvinyl chloride, for the purposes of the present invention, is considered to be a polyvinyl chloride (PVC) with an amount of plasticizer of 5 phr (weight parts per hundred weight parts of the PVC) or above.

The decorative panel of the invention may show one or a combination of two or more of the below five preferred features.

According to a first preferred feature, said at least one layer of plasticized polyvinyl chloride is a foamed layer. In other words, in accordance with said first preferred feature, said foamed layer and said layer of plasticized polyvinyl chloride may be formed by a single layer of foamed plasticized PVC. A foamed layer of plasticized PVC may lead to a very good sound-absorption in relation to noises generated while walking on such a decorative, in that case, floor panel. Preferably, in said first preferred feature, said foamed plasticized PVC layer is positioned in between the decorative top layer and a further substrate portion. Said further substrate portion preferably being a less plasticized PVC layer, preferably a layer of PVC with a plasticizer content of less than 5 phr, or an unplasticized PVC layer. Said further substrate portion or layer may be foamed as well. The presence of a less plasticized or unplasticized PVC layer as a further substrate portion or layer may form a support for said foamed plasticized layer in that said further substrate portion may form a barrier preventing deformations at the upper surface due to unevenness of the subfloor. The further substrate portion may comprise, at at least two opposite edges, coupling means, or portions thereof, wherein said coupling means allow obtaining a mechanical locking at the respective edges in a horizontal direction perpendicular to the coupled edges and in the plane of the coupled panels and/or in a vertical direction perpendicular to said plane.

According to a second preferred feature, said substrate comprises at least one layer of polyvinyl chloride that is less plasticized than said at least one layer of plasticized polyvinyl chloride, e.g. with a plasticizer content of less than 5 phr, or that is unplasticized. Preferably, said less plasticized or unplasticized PVC layer is a foamed layer. As is explained above, said at least one layer of plasticized polyvinyl chloride, whether or not foamed, is preferably positioned between said less plasticized or unplasticized PVC layer and said decorative top layer. Preferably said plasticized and said less plasticized or unplasticized polyvinyl chloride layer are provided on top of each other in the absence of glue or adhesive layers. Said plasticized and said less plasticized or unplasticized polyvinyl chloride layer may for example be formed as a commonly extruded sheet material.

According to a third preferred feature, said foamed layer and said plasticized polyvinyl chloride layer are formed as an extruded sheet material, preferably having at least two layers forming separate portions of said extruded sheet material, namely a first portion formed by said foamed layer and a second portion formed by said plasticized polyvinyl chloride layer. Preferably said extruded sheet material consists of said first and said second portion, and is hence free from other commonly extruded material portions. Preferably, the extruded sheet material and/or the substrate are free from textile reinforcement layers, such as woven or nonwoven glass fiber layers, and/or are free or substantially free of fibrous reinforcement, such as glass fibers, PVA (polyvinyl alcohol) fibers, cellulose fibers and the like.

According to a fourth preferred feature, said substrate is free of further layers that are connected to said foamed layer and/or said plasticized polyvinyl chloride layer in the absence of glue and adhesive layers. Preferably, said substrate consists of two portions, a first portion being formed by said foamed layer, and a second portion being formed by said plasticized PVC layer, wherein said two portions are connected to each other in the absence of glue and adhesive layers. Preferably, the substrate is free from textile reinforcement layers, such as woven or nonwoven glass fiber layers, and/or are free or substantially free of fibrous reinforcement, such as glass fibers, PVA (polyvinyl alcohol) fibers, cellulose fibers and the like.

According to a fifth preferred feature, said foamed layer and said plasticized polyvinyl chloride layer are separate layers, wherein said foamed layer is thicker than said plasticized polyvinyl chloride layer, preferably at least twice as thick, or at least four times as thick. In such case, a sturdy support of the plasticized PVC layer may be obtained, wherein potential coupling means can basically be formed in said foamed layer, and wherein the plasticized layer may be present at the outer surface of said substrate, which outer surface is directly adjacent to a portion of said decorative top layer, e.g. directly adjacent to a printed thermoplastic foil, e.g. a printed PVC foil. The presence of said plasticized polyvinyl chloride layer, or second portion in accordance with said fourth preferred feature, directly adjacent to a lowermost portion of said decorative top layer may lead to enhanced embossing ability of the decorative top layer, for example for forming embossments that create lowered edges at one or both edges of a pair of opposite edges of said decorative panel. Embossing can be further promoted when said plasticized PVC layer is also a foamed layer.

In the most preferred embodiment, the decorative panel comprises the following features in combination:
- the feature that said foamed layer and said plasticized polyvinyl chloride layer are formed as an extruded sheet material, having two layers forming separate portions of said extruded sheet material, namely a first portion formed by said foamed layer and a second portion formed by said plasticized polyvinyl chloride layer. Preferably, the extruded sheet material is a material obtained through coextrusion, namely by extruding the respective two layers adjacent to each other, either by extruding them through a common die, fed by means of at least two extruders, i.e. at least one for extruding the composition of the first portion and at least one for extruding the composition of the second portion, or by extruding them through separate dies, preferably each fed by means of at least one extruder;
- the feature that said at least one layer of plasticized polyvinyl chloride forming said second portion is a foamed layer, as well;
- the feature that said foamed layer forming said first portion is a layer of polyvinyl chloride that is less plasticized than said at least one layer of plasticized polyvinyl chloride, forming said second portion, e.g. said foamed layer forming said first portion, is a polyvinyl chloride layer with a plasticizer content of less than 5 phr, or that is unplasticized;
- the feature that said substrate consists of said first and said second portion, wherein said first and said second portion are connected to each other in the absence of glue and adhesive layers;
- the feature that said foamed layer forming said first portion, and said second portion forming said plasticized polyvinyl chloride layer, which is also foamed, are separate layers, wherein said first portion is thicker than said second portion, preferably is at least twice as thick, or at least four times as thick; and
- the feature that said substrate at at least two opposite edges comprises coupling means basically formed in said first portion, and wherein said second portion is present at the outer surface of said substrate, which outer surface is directly adj acent to a portion of said decorative top layer, e.g. directly adjacent to a printed thermoplastic foil, e.g. a printed PVC foil.

The combination of features in accordance with said most preferred embodiment lead to a decorative panel that can fluently be manufactured at an advantageous cost, while combining a light weight, water-resistant core, with an acceptable noise reduction, a comfortable walking feel, convenient installation and resultant quality of connection, as well as a good lamination strength of said decorative top layer. Indeed, the inventors have noted that the presence of a plasticized PVC layer on top of a foamed less plasticized PVC layer leads to a more secure lamination of the decorative top layer. A direct lamination of the decorative top layer, e.g. a printed PVC foil, to a less plasticized foamed PVC layer may lead to delamination due to tearing of the cell walls at the outer surface more quickly, than is the case with a more plasticized layer. The less plasticized foamed PVC layer is convenient to provide for a barrier against deformations due to subfloor unevenness and to provide a sturdy support and ditto coupling means, with limited weight. The presence of said second portion directly adjacent to a lowermost portion of said decorative top layer may lead to enhanced embossing ability of the decorative top layer, for example for forming embossments that create lowered edges at one or both edges of a pair of opposite edges of said decorative panel.

Preferably, the density of said foamed layer in general, and in particular in relation to said most preferred embodiment, is between 1250 and 1750 kg per cubic mer, for example between 1400 and 1500 kg per cubic meter.

In general, but in particular in said most preferred embodiment, said substrate comprises at least a first and a second portion formed by foamed layers, e.g. a second portion formed by said layer of plasticized polyvinyl chloride and an underlaying first portion formed by a foamed layer of less plasticized or unplasticized polyvinyl chloride. The foaming techniques employed in the context of the present invention comprise foaming techniques chosen from the list consisting of direct injection of a gas or gas forming agent in the extruder barrel, direct injection of a gas or gas forming agent in the extruder outlet in front of a slot die, direct injection of a gas or gas forming agent in the slot die, chemical foaming by extruding a composition comprising a foaming agent, such as azodicarbonamide and/or sodium bicarbonate, and extruding a composition comprising a foamed filler material. Preferably, at least one of the first and second portions comprises cells containing a gas different from air, for example cells that comprise gas consisting at least for 85 vol% of N2 and/or CO2. Preferably, the foams of the first and the second foamed layer are obtained through the same foaming technique, for example both through extrusion of a composition comprising a foaming agent, e.g. azodicarbonamide. Alternatively, mutually different foaming techniques may be applied for foaming the composition of the first and the second portion.

It is noted that an extruded sheet material described in connection with said most preferred embodiment, shows several preferred features which each in themselves present inventive aspects of the present disclosure. It is hence clear that the present invention in accordance with a particular independent aspect is a sheet material for forming a substrate of a decorative panel, characterized in that said sheet material is an extruded sheet material and shows one or a combination of two of more of the following features:
- the features that said extruded sheet material consists of a first and a second layer, wherein said first and said second layer comprise foamed thermoplastic material, preferably PVC. Preferably both foams are obtained by adding a foaming agent, such as azodicarbonamide, to the PVC composition to be extruded;
- the feature that said extruded sheet material consists of a first and a second layer, with a first layer being at least twice as thick, or at least four times as thick as a second layer;
- the feature that said extruded sheet material consists of two layers, said two layers comprising at least one foamed layer and at least one plasticized PVC layer;
- the feature that said extruded sheet material consists of two layers, said two layers comprising PVC with a mutually different plasticizer content, wherein a first layer preferably has a plasticizer content below 5 phr, and a second layer preferably has a plasticizer content of 15 phr or above, or even of 50 phr or above;
- the feature that said extruded sheet material comprises at least a first foamed layer and a second foamed layer, wherein at least one of the first and second foamed layers comprises cells containing a gas different from air, for example cells that comprise gas consisting at least for 85 vol% of N2 and/or CO2; and/or
- the feature that said extruded sheet material comprises at least a first foamed layer and a second foamed layer, wherein the foams of the first and the second foamed layer are obtained through mutually different foaming techniques, preferably chosen from the list consisting of direct injection of a gas or gas forming agent in the extruder barrel, direct injection of a gas or gas forming agent in the extruder outlet in front of a slot die, direct injection of a gas or gas forming agent in the slot die, chemical foaming by extruding a composition comprising a foaming agent, such as azodicarbonamide and/or sodium bicarbonate, and extruding a composition comprising a foamed filler material;
- the feature that said extruded sheet material comprises at least a first foamed layer and a second foamed layer, wherein the foams of the first and the second foamed layer are both obtained through a same foaming technique, preferably chosen from the list consisting of direct injection of a gas or gas forming agent in the extruder barrel, direct injection of a gas or gas forming agent in the extruder outlet in front of a slot die, direct injection of a gas or gas forming agent in the slot die, chemical foaming by extruding a composition comprising a foaming agent, such as azodicarbonamide and/or sodium bicarbonate, and extruding a composition comprising a foamed filler material. Preferably, both layers are obtained through chemical foaming by extruding a composition comprising a foaming agent, such as azodicarbonamide.

Preferably, the extruded sheet material of said particular independent aspect is applied as a substrate for a decorative panel having coupling means, wherein the coupling means are basically formed in said first layer, i.e. at least a pair of vertically active locking surfaces and/or a pair of horizontally active locking surfaces are formed in said first layer.

Preferably, the extruded sheet material of said particular independent aspect is applied as a substrate for a decorative panel, wherein said decorative panel further comprises a decorative top layer applied to said extruded sheet material, preferably via thermal lamination and/or in the absence of glue and adhesive layers, wherein said second layer is directly adjacent to said decorative top layer.

It is clear that the extruded sheet material may be applied as the substrate of a decorative panel showing the characteristics of said first independent aspect and/or the preferred embodiments thereof, without there necessarily being a foamed layer and a plasticized PVC layer.

It is further clear that the invention also concerns a method for manufacturing the sheet material of the particular independent aspect, with as a characteristic that the first and the second layer are formed by means of coextrusion, namely by extruding the respective two layers adjacent to each other, e.g. by extruding them through a common die, fed by means of at least two extruders, i.e. at least one for extruding the composition of the first layer and at least one for extruding the composition of the second layer, or by extruding them through separate dies, preferably each fed by means of at least one extruder;

In general, the decorative panel of the invention preferably comprises coupling means at at least one pair of two opposite edges of said panel, wherein said coupling means allow obtaining a locking at the respective edges in a horizontal direction perpendicular to the coupled edges and in the plane of the coupled panels and/or in a vertical direction perpendicular to said plane.

Preferably, said coupling means are basically formed in said foamed layer.

Preferably at least 70% of the contour of said coupling means, as seen in a cross-section perpendicular to the respective edge, is formed in said foamed layer.

Preferably, said coupling means are formed as a tongue at one edge of said pair of opposite edges and a groove at the other edge of said pair of opposite edges. Such tongue and groove may mainly be responsible for said locking in said vertical direction. Preferably said tongue and groove comprise locking means preventing the drifting apart of said tongue and groove in said horizontal direction.

Preferably, in a coupled condition of said coupling means, vertically active locking surfaces are formed, for example, in the case of coupling means having or substantially having the shape of a tongue and a groove bordered by an upper lip and a lower lip, said vertically active locking surfaces may at least be formed between a top side of said tongue and a bottom side of said upper lip of the groove. Preferably said vertically active locking parts are formed in said foamed layer.

Preferably, in a coupled condition of said coupling means, horizontally active locking surfaces are formed, for example, in the case of coupling means having or substantially having the shape of a tongue and a groove bordered by an upper lip and a lower lip, said horizontally active locking surfaces may at least be formed between an upstanding locking part on the upper side of the lower lip and a bottom side of said tongue. Preferably said horizontally active locking surfaces are formed in said foamed layer.

Preferably, said foamed layer or said first portion comprises a thermoplastic material, preferably polyvinyl chloride, and filler materials in a weight ratio of filler to thermoplastic material higher than 1.5:1.

Preferably, said foamed layer or second portion has a density that is at least 15%, or at least 20% lower than an identical unfoamed material.

Preferably, said plasticized polyvinyl chloride layer or said second portion comprises more than 25 phr of plasticizer, preferably more than 50 phr, or more than 65 phr.

Preferably, said decorative top layer comprises a printed thermoplastic film and a provided thereon transparent thermoplastic wear layer. Preferably said thermoplastic film is a PVC film with a plasticizer content of 5phr or lower, while said thermoplastic wear layer is preferably a layer of PVC with a plasticizer content of 20 phr or more, preferably 30 phr or more, e.g. about 35 phr.

Preferably, said decorative panel further comprises a foamed layer at the side of said substrate opposite said decorative layer, wherein said foamed layer is connected to said substrate by means of a glue or adhesive layer.

With the same aim as in said first independent aspect, the present invention in accordance with its second independent aspect is a decorative panel comprising at least a substrate and a provided thereon decorative top layer, with as a characteristic that said substrate comprises at least a first and a second layer having a mutually different composition, wherein a first layer forms at least two thirds of the thickness of said substrate, or at least four fifths of the thickness of said substrate. Preferably said second layer is positioned between said first layer and said decorative top layer. Preferably said substrate comprises or consists of an extruded sheet material in accordance with said particular independent aspect.

Preferably, said second layer forms the remainder of said thickness of said substrate.

Preferably, that said first layer is a foamed layer, and said second layer is a plasticized polyvinyl chloride layer.

Preferably, said first and said second layer are provided on top of each other in the absence of glue and adhesive layers.

Preferably, said first and said second layer have a mutually different composition in that they differ in one or a combination of two or more of the following:
- a different filler material : thermoplastic material weight ratio; preferably a difference of at least 10%, when the thermoplastic material is expressed as 1 in the ratio;
- a different plasticizer content as expressed in phr; preferably a difference of at least 15 phr; and/or
- a different foaming rate, as expressed in density reduction as compared to an unfoamed identical composition; preferably a difference of at least 5% density reduction.

It is clear that the decorative panel of the second aspect may further show the characteristics of the first aspect and/or the preferred embodiments thereof, wherein said first layer then preferably is a foamed layer as described in connection to the first aspect, and said second layer is a plasticized polyvinyl chloride layer as described in connection to the first aspect.

With the same aim as in said first independent aspect, the present invention in accordance with its third independent aspect is a decorative panel, with as a characteristic that from top to bottom said decorative panel comprises:
- a decorative top layer;
- a substrate consisting of a first portion and a second portion, said second portion being a plasticized polyvinyl chloride layer, and said first portion being a foamed less plasticized polyvinyl chloride layer;
- an optional foamed layer provided by means of a glue or adhesive layer to the bottom of said substrate.

Preferably, said second portion has a thickness between 0.25 and 0.75 mm.

Preferably, said second portion comprises filler material, preferably particles of calcium carbonate, such as chalk, and/or particles of magnesium silicate, such as talc.

Preferably, said second portion comprises a filler material : polyvinyl chloride ratio of above 1.5:1, preferably about 2:1.

Preferably, said second portion comprises plasticizer in an amount of 25 phr or above, preferably 50 phr or above, or 65 phr or above, for example about 70 phr.

Preferably, said second portion is positioned in between said first portion and said decorative top layer. Preferably said second portion forms an outermost surface of said substrate, directly adjacent to a lowermost portion of said decorative top layer. The plasticizer content of said second portion may lead to a fluent thermal lamination of said lowermost portion, e.g. a printed thermoplastic foil, such as a printed PVC foil. The presence of said second portion directly adjacent to said lowermost portion of said decorative top layer may lead to enhanced embossing ability of the decorative top layer, for example for forming embossments that create lowered edges at one or both edges of a pair of opposite edges of said decorative panel.

Preferably, said first portion comprises polyvinyl chloride and filler material, wherein the filler material : polyvinylchloride ratio is above 1.5:1, preferably about 2.25: 1.

Preferably, said first portion is foamed and has a density that is at least 15%, or at least 20% lower than an identical unfoamed material, wherein the density is preferably higher than 60% or higher than 65% of an identical unfoamed material.

Preferably, said first portion has a thickness of between 3 and 5 mm, preferably about 4 mm or about 3.75 mm.

Preferably, said optional foamed layer is an open cell foam, e.g. of Ethylene Vinyl Acetate (EVA) or Polyethylene (PE), and/or has a thickness of between 0.5 and 1.5 mm, preferably about 1 mm.

Preferably, said decorative top layer comprises a printed film, preferably a rigid PVC film, e.g. having a thickness of 0.05 to 0.1 mm, and/or a transparent wear layer of plasticized poly vinyl chloride having a thickness between 0.2 and 0.77 mm, preferably about 0.3 mm or about 0.55 mm.

According to the most preferred embodiment of said second and/or third independent aspect, the decorative panel shows at least the following characteristics:
- said second portion has a thickness of about 0.6 mm, and comprises 200 phr of filler material and 70 phr of plasticizer;
- said first portion has a thickness of about 4 mm or about 3.75 mm, and comprises 225 phr of filler material and is foamed such that there is a density reduction as compared to an unfoamed identical material of 20 to 40%, preferably 25 to 35%, e.g about 33%;
- said optional foamed layer has a thickness of about 1 mm and is an open-cell foam; and
- said first and second portion are provided on top of each other without glue or adhesive layers. Said first and second portion are preferably formed as coextruded layers of an extruded sheet material, wherein said extruded sheet material preferably consists of said first and said second portion.

It is clear that the decorative panel of the third independent aspect may further show the characteristics of the first or second independent aspect and/or the preferred embodiments thereof and that the decorative panel of the third independent aspect may comprise a sheet material in accordance with said particular independent aspect as a substrate.

It is clear that the present invention further relates to a method for manufacturing a decorative panel in accordance with any of the first till third aspect and/or the preferred embodiments thereof, wherein said layers of said substrate are obtained by means of an extrusion operation, preferably using two extruders feeding a single slot die or using two extruders each feeding a respective slot die. In the former case, preferably said two extruders are linked to a feeding block for said single slot die. In the latter case, a first slot die is shaping the composition of said first layer, and a second slot die is shaping the composition of said second layer. In each case, a first extruder is extruding the composition of said first layer, first portion or foamed layer, and a second extruder is extruding the composition of said second layer, second portion or plasticized PVC layer.

In the case where at least two extruders, preferably exactly two extruders, are feeding a single slot die, according to an alternative, the two extruders may be linked to separate inlet of said single slot die. Preferably the inlet for providing the composition of said second portion is of a smaller size, more particularly diameter, than the inlet for providing the composition of said first portion. Internally in the die, the path of the respective extruded compositions converges and the extruded sheet material leaving the slot nozzle or opening of the die comprises said first and second portions in the desired, or nearly the desired, buildup as described in connection to one or more of the independent aspects of the invention.

In general, it is noted that using a single slot die is advantageous in that an initial calibration of the thickness of the substrate comprising the first and second portion is already performed by means of the slot opening of the die.

In accordance with any of the aspects of the present invention, the decorative panel preferably has a modulus of elasticity greater than 1000MPa, preferably greater than 2000 MPa.

Plasticizers that may be employed in any of the layers of said substrate include: organic esters of various acids, such as phthalic, phosphoric, adipic, sebacic, citric acid. Specific examples of plasticizers include dioctyl phthalate, dioctyl adipate, dibutyl sebacate, dinonyl phthalate and glyceryl stearate. Alternative plasticizers including vegetable oils, such as soybean oil, are possible. Blends of two or more of the aforementioned plasticizers are possible as well.

Preferably dioctyl terephthalate (DOTP) is applied in said plasticized PVC layer or in said second portion.

It is clear that the decorative panel of the present invention, in accordance any of the independent aspects, may comprise a decorative top layer that has been provided with embossments. According to a preferred embodiment, the decorative top layer at least comprises embossments that deform said substrate, or at least said second portion, said second layer, or said plasticized PVC layer. It is clear that also the first portion, first layer, or foamed layer may be deformed or stays undeformed due to the embossments. Preferably said embossments at least comprise an embossment that forms a lower edge region at one or more edges of said decorative panel, preferably in the form of a straight or bent chamfer, wherein the decorative top layer comprises a printed pattern that extends continuously from the global upper surface of said decorative top layer over the surface of the lower edge region towards or all the way to the respective panel upper edge. Preferably, in such case, said upper edge is positioned in a horizontal plane that intersects said substrate, and preferably also intersects said first portion, first layer, or foamed layer. Potentially, said horizontal plane intersects said second portion, second layer, or plasticized PVC layer, while being for example located completely above said first portion, first layer, or foamed layer.

It is further noted that the foaming techniques employed in the context of the present invention, in accordance with any of its independent aspects, comprise foaming techniques chosen from the list consisting of direct injection of a gas or gas forming agent in the extruder barrel, direct injection of a gas or gas forming agent in the extruder outlet in front of a slot die, direct injection of a gas or gas forming agent in the slot die, chemical foaming by extruding a composition comprising a foaming agent, such as azodicarbonamide and/or sodium bicarbonate, and extruding a composition comprising a foamed filler material.

It is further clear that the aspects and preferred embodiments relating to a method of manufacturing may initially be used to manufacture larger board material, for example larger decorated and extruded sheet material, which is to be further finished and divided into half products having about the final desired dimensions of the decorative panels of the invention. The obtained half products may then further be subjected to such operations as milling operations to provide for coupling means at one or both pairs of opposite edges in order to convert them to the decorative panels of the invention.

With the intention of better showing the characteristics of the invention, in the following, as an example without limitative character, some embodiments are described, with reference to the accompanying drawings, wherein:
figure 1 in perspective shows a decorative panel in accordance with the invention;
figure 2 at a larger scale shows a cross-section according to the line II-II indicated in figure 1;
figure 3 illustrates some steps in a method for manufacturing the decorative panel of figure 1; and
figures 4 and 5 at a larger scale illustrates variants in a view on the area indicated with F4 in figure 3.

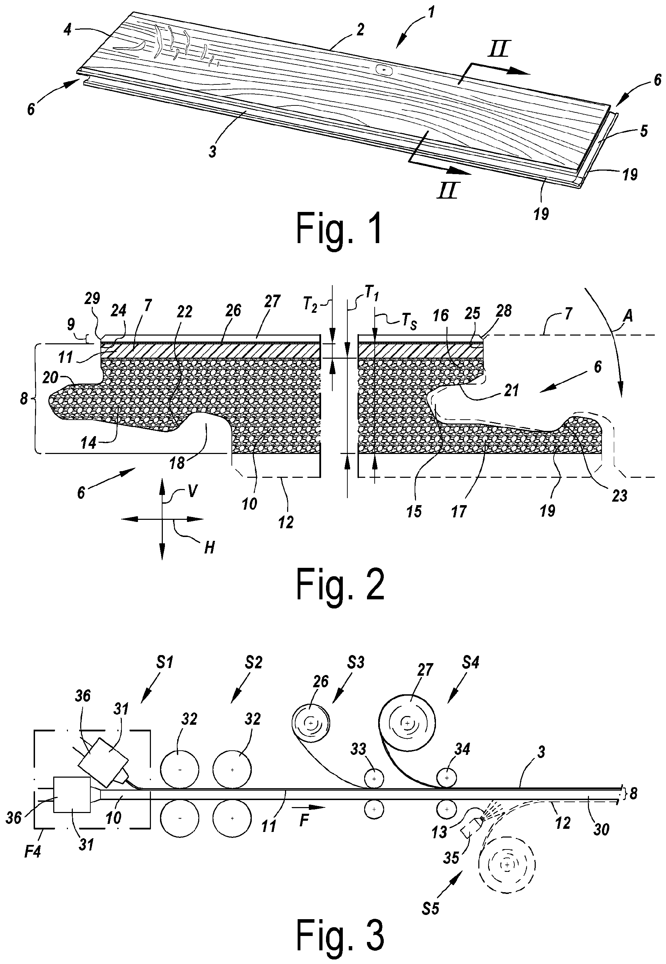

Figure 1 shows a decorative panel 1, in this case a floor panel, wherein a plurality of such floor panels can be assembled for forming a floating floor covering. The decorative panel 1 is rectangular and oblong, and thus provided with a long pair of opposite edges 2-3 and a short pair of opposite edges 4-5. Both pairs of opposite edges 2-3-4-5 are provided with coupling means 6.

Figure 2 illustrates that the coupling means 6 at the long pair of opposite edges 2-3 allow obtaining a locking at the respective edges 2-3 in a horizontal direction H perpendicular to the coupled edges 2-3 and in the plane of coupled panels 1 and in a vertical direction V perpendicular to said plane. The coupled condition, as illustrated with the dashed line 7, may at least be obtainable by means of an angling motion A around the respective edges 2-3. Though not represented in detail in figure 1, it is clear that the coupling means 6 at the short pair of opposite edges 4-5 may also allow obtaining a locking in a direction perpendicular to the short pair of coupled edges 4-5 and in said vertical direction V. The coupling means 6 at the short pair of coupled edges 4-5 may be shaped similarly, identical or differently than the coupling means 6 at the long pair of coupled edges 2-3.

The decorative panel 1 comprises a substrate 8 and a provided thereon decorative top layer 9. The substrate 8 consists of a first portion 10 and a second portion 11. The second portion 11 is positioned between said first portion 10 and said decorative top layer 9. The first portion 10 is a foamed layer and the second portion 11 is a layer of plasticized polyvinyl chloride, which may be foamed as well, though not necessarily. Optionally, as illustrated with the dashed line 12, an additional foamed layer may be provided by means of glue 13 or an adhesive layer to the bottom of said substrate 8, more particularly to the bottom of said first portion 10. Said first portion 10 forms at least two thirds, and in the example at least four fifths, of the thickness TS of said substrate 8, while the second portion 11 forms the remainder to the thickness TS of said substrate. The first portion 10 and the second portions 11 are provided on top of each other in the absence of glue and adhesive layers. More particularly said substrate 8 consists of an extruded sheet material comprising, and in this case consisting of, said first portion 10 and said second portion 11.

In this particular case, the first portion 10 has a thickness T1 of 4 mm, and the second portion 11 has a thickness T2 of 0.6 mm. The total thickness TS of the substrate 8 is the sum of both, being 4.6 mm.

It is clear that the first portion 10 and the second portion 11 have a mutually different composition. In the example the first portion 10 and the second portion 11 at least have a different plasticizer content, wherein the first portion 10 is less plasticized than said second portion 11.

From the above, it is clear that the panel 1 of figures 1 and 2 illustrate an embodiment in accordance with the first, second and third independent aspect of the invention, while the extruded sheet material 30 forming the substrate 8 may show the characteristics of the particular independent aspect mentioned in the introduction.

Figure 2 further illustrates that the coupling means 6 are basically formed in said first portion 10. In this case at least 70% of the contour of said coupling means 6, as seen in the cross-section of figure 2, i.e. perpendicular to the long pair of opposite edges 2-3, is formed in said first portion 10.

The coupling means 6 of the example are, at least at the long pair of opposite edges 2-3, formed a s a tongue 14 at one edge 2 and a groove 15 at the opposite edge 3, wherein the groove 15 is bordered by an upper lip 16 and a lower lip 17. The tongue 14 and groove 15 are mainly responsible for said locking in said vertical direction V. Said tongue 14 and groove 15 are further provided with locking means or locking parts 18-19 preventing the drifting apart of said tongue 14 and groove 15 in said horizontal direction H. In the coupled condition, vertically active locking surfaces 20-21 are formed between a top side of said tongue 14 and a bottom side of said upper lip 16 of said groove 15. In the example these vertically active locking surfaces 20-21 are positioned within said first portion 10, i.e. are formed in said foamed layer. Further horizontally active locking surfaces 22-23 are formed between an upstanding locking part 19 on the upper side of the lower lip 17 and a bottom side of said tongue 14. Theses horizontally active locking surfaces 22-23 are also formed in said first portion 10 or foamed layer. Preferably, a further pair of contact surfaces 24-25 are formed at least on said second portion 11. This further pair of contact surfaces 24-25 may provide for a closed seam at the joint in a coupled condition of the respective edges 2-3.

The decorative top layer 9 comprises a printed thermoplastic film 26 and a provided thereon transparent thermoplastic wear layer 27. In the example, said thermoplastic film 26 is a PVC film and said wear layer 27 is a layer of PVC as well. The wear layer may have a thickness between 0.2 and 1 mm, preferably 0.77 mm or less, for example about 0.3, about 0.55 or about 0.75 mm. The printed thermoplastic film may have a thickness of 50 to 100 micrometer, for example about 90 micrometer.

Figure 2 further illustrates that the decorative top layer 9 may be provided with a lowered edge region 28, in the example in the form of a chamfer, more particularly a straight chamfer, at the long pair of opposite edges 2-3. It is clear that also the short pair of opposite edges 4-5 may be provided with a lowered edge region 28. The lowered edge region 28 illustrated in figure 2 has a distal point 29 that is positioned above said printed thermoplastic film 26. The printed pattern is thus continuous form the global upper surface of the panel 1 and extends uninterruptedly to said distal point 29. In the example the lowered edge region 28 has been formed by removing a portion from at least said wear layer 27. In accordance with a variant the lowered edge region 28 may be formed by deforming, e.g. embossing or pressing down, the decorative top layer 3 and potentially the material of the substrate 8, more in particular said first portion 10. In such case a lowered edge region 28 may be obtained having a distal point 29, forming the upper edge of said panel 1 at the respective edge 2-3 and being positioned in a horizontal plane that intersects the substrate 8, and preferably also intersects said first portion 10.

It is clear that the substrate 8 of the example in figures 1 and 2 is free from textile reinforcement layers and, in this case, the substrate 8 is also free from fibrous reinforcement.

Figure 3 illustrates some steps S1-S4 in a method for obtaining a larger decorated and extruded sheet material 30. The obtained sheet material 30 may be further finished and divided into half products having about the final desired dimensions of the decorative panels 1 of the invention. The obtained half products may be further subjected to such operations as milling operations to provide for coupling means 6 at one or both pair of opposite edges 2-3-4-5 in order to convert them to the decorative panels 1 of the invention.

In a step S1 the first portion 10 and the second portion 11 of the substrate 8 are formed by extruding the respective portions 10-11 or layers adjacent to each other. In this case, the portions are extruded through separate dies 31, each fed by at least one extruder, wherein the extruders are not represented in figure 3.

In a step S2 the first portion 10 and second portion 11 are treated by means of one or more pairs of rollers 32, for example in order to connect the first and second portion to each other, in order to cool the extruded sheet 30 or in order to calibrate the thickness of the substrate 8 formed by said first portion 10 and said second portion 11. In a step S3 a printed thermoplastic film 26 is applied to the surface of said second portion 11 by means of thermal lamination using rollers 33. In a step S4 a transparent thermoplastic wear layer 27 is applied on top of said printed thermoplastic film 26, also by means of thermal lamination using rollers 34. Optionally in step S5 an additional foamed layer 12 is applied to the bottom of said second portion 10 by means of glue 12. The glue 12 is in the example applied via a spray gun 35.

Although step S5 is illustrated as being downstream in the feed direction F from the steps S2 to S4, it is clear that the provision of the additional foamed layer 12 may be executed anywhere downstream from the die 31 providing said first portion 10.

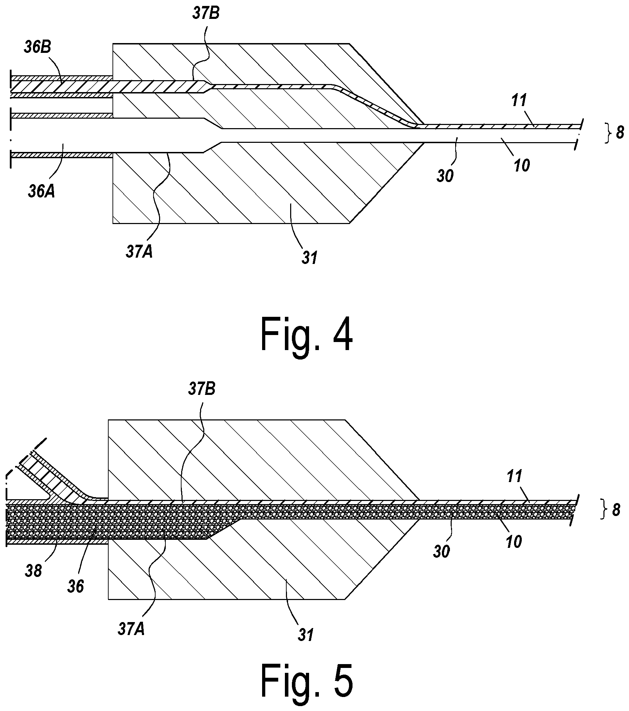

Figure 4 illustrates the step S1 where a single slot die 31 has been applied, which is fed by means of two extruders, each feeding said die 31 via a separate inlet 36A-36B. The inlet 36A in relation to the composition 37A for said first portion 10 has a larger size, more particularly diameter, than the inlet 36B in relation to the composition 37B for said second portion 11. Figure 4 clearly show that the paths of the compositions 37A-37B converge internally in the die 31.

Figure 5 illustrates another alternative for the step S1, more particularly for using a single slot die 31. Herein the single slot die 31 is fed by means of two extruders that are linked to a common feeding block 38 for said single die 31. It is noted that the feeding block 38 is drawn schematically, and that, preferably the compositions 37A and 37B are basically flowing in tubes having their center in a common horizontal plane. A set-up, as schematically shown in the figure, wherein the compositions 37A-37B flow in tubes having their center in a common vertical, or substantially vertical, plane, or in another plane, is of course not excluded.

Herein below some independent aspects and preferred embodiments are described by means of numbered paragraphs.
1.- Decorative panel comprising at least a substrate 8 and a provided thereon decorative top layer 9, characterized in that said substrate 8 comprises at least one foamed layer and at least one layer of plasticized polyvinyl chloride.
2.- Decorative panel according to numbered paragraph 1, characterized in that said at least one layer of plasticized polyvinyl chloride is a foamed layer.
3.- Decorative panel according to numbered paragraph 1 or 2, characterized in that said substrate comprises at least one layer of polyvinyl chloride that is less plasticized than said at least one layer of plasticized polyvinyl chloride, or that is unplasticized.
4.- Decorative panel according to numbered paragraph 3, characterized in that said less plasticized or unplasticized PVC layer is a foamed layer.
5.- Decorative panel according to numbered paragraph 3 or 4, characterized in that said at least one layer of plasticized polyvinyl chloride is positioned between said less plasticized or unplasticized PVC layer and said decorative top layer 9.
6.- Decorative panel according to any of numbered paragraphs 3 to 5, characterized in that said plasticized and said less plasticized or unplasticized polyvinyl chloride layer are provided on top of each other in the absence of glue or adhesive layers.
7.- Decorative panel according to numbered paragraph 6, characterized in that said plasticized and said less plasticized or unplasticized polyvinyl chloride layer are formed as a commonly extruded sheet material 30.
8.- Decorative panel according to any of the preceding numbered paragraphs, characterized in that said foamed layer and said plasticized polyvinyl chloride layer are formed as an extruded sheet material 30.
9.- Decorative panel according to any of the preceding numbered paragraphs, characterized in that said substrate 8 is free of further layers that are connected to said foamed layer and/or said plasticized polyvinyl chloride layer in the absence of glue and adhesive layers.
10.- Decorative panel according to any of the preceding numbered paragraphs, characterized in that said foamed layer and said plasticized polyvinyl chloride layer are separate layers, wherein said foamed layer is thicker than said plasticized polyvinyl chloride layer, preferably at least twice as thick, or at least four times as thick.
11.- Decorative panel according to any of the preceding numbered paragraphs, characterized in that said panel 1 comprises coupling means 6 at at least two opposite edges 2-3 of said panel 1, wherein said coupling means 6 allow obtaining a locking at the respective edges 2-3 in a horizontal direction H perpendicular to the coupled edges 2-3 and in the plane of the coupled panels 1 and/or in a vertical direction V perpendicular to said plane.
12.- Decorative panel according to numbered paragraph 11, characterized in that said coupling means 6 are basically formed in said foamed layer.
13.- Decorative panel according to any of the preceding numbered paragraphs, characterized in that said foamed layer comprises a thermoplastic material, preferably polyvinyl chloride, and filler materials in a weight ratio of filler to thermoplastic material higher than 1.5:1.
14.- Decorative panel according to any of the preceding numbered paragraphs, characterized in that said plasticized polyvinyl chloride layer comprises more than 25 phr of plasticizer, preferably more than 50 phr, or more than 65 phr.
15.- Decorative panel according to any of the preceding numbered paragraphs, characterized in that said decorative top layer 9 comprises a printed thermoplastic film 26 and a provided thereon transparent thermoplastic wear layer 27.
16.- Decorative panel according to any of the preceding numbered paragraphs, characterized in that said decorative panel 1 further comprises a foamed layer at the side of said substrate 8 opposite said decorative layer 9, wherein said foamed layer is connected to said substrate 8 by means of a glue or adhesive layer.
17.- Decorative panel according to any of the preceding numbered paragraphs, characterized in that said foaming layer has a density that is at least 15%, or at least 20% lower than an identical unfoamed material.
18.- Decorative panel comprising at least a substrate 8 and a provided thereon decorative top layer 9, characterized in that said substrate 8 comprises at least a first and a second layer having a mutually different composition, wherein a first layer forms at least two thirds of the thickness TS of said substrate 8.
19.- Decorative panel according to numbered paragraph 18, characterized in that said second layer forms the remainder of said thickness TS of said substrate 8.
20.- Decorative panel according to numbered paragraph 18 or 19, characterized in that said first layer is a foamed layer, and said second layer is a plasticized polyvinyl chloride layer.
21.- Decorative panel according to any of numbered paragraphs 18 to 20, characterized in that said first and said second layer are provided on top of each other in the absence of glue and adhesive layers.
22.- Decorative panel according to any of numbered paragraphs 18 to 21, characterized in that said panel 1 further shows the characteristics of any of numbered paragraphs 1 to 17, wherein said first layer is a foamed layer as in any of numbered paragraphs 1 to 17, and said second layer is a plasticized polyvinyl chloride layer as in any of numbered paragraphs 1 to 17.
23.- Decorative panel, characterized in that from top to bottom said decorative panel 1 comprises:
   - a decorative top layer 9;
   - a substrate 8 consisting of a first portion 10 and a second portion 11, said second portion 11 being a plasticized polyvinyl chloride layer, and said first portion (10) being a foamed less plasticized polyvinyl chloride layer;
   - an optional foamed layer 12 provided by means of a glue 13 or adhesive layer to the bottom of said substrate 8.
24.- Decorative panel according to numbered paragraph 23, characterized in that said second portion has a thickness T2 between 0.25 and 0.75 mm.
25.- Decorative panel according to numbered paragraph 23 or 24, characterized in that said second portion 11 comprises filler material, preferably particles of calcium carbonate, such as chalk, and/or particles of magnesium silicate, such as talc.
26.- Decorative panel according to numbered paragraph 25, characterized in that said second portion 11 comprises a filler material : polyvinyl chloride ratio of above 1.5:1, preferably about 2:1.
27.- Decorative panel according to any of numbered paragraphs 23 to 26, characterized in that said second portion 11 comprises plasticizer in an amount of 25 phr or above, preferably 50 phr or above, or 65 phr or above, for example about 70 phr.
28.- Decorative panel according to any of numbered paragraphs 23 to 27, characterized in that said first portion comprises polyvinyl chloride and filler material, wherein the filler material : polyvinylchloride ratio is above 1.5:1, preferably about 2.25: 1.
29.- Decorative panel according to any of numbered paragraphs 23 to 28, characterized in that said first portion 10 is foamed and has a density that is at least 15%, or at least 20% lower than an identical unfoamed material, wherein the density is preferably higher than 60% or higher than 65% of an identical unfoamed material.
30.- Decorative panel according to any of numbered paragraphs 23 to 29, characterized in that said first portion 10 has a thickness T1 of between 3 and 5 mm, preferably about 4 mm or about 3,75 mm.
31.- Decorative panel according to any of numbered paragraphs 23 to 30, characterized in that said optional foamed layer is an open cell foam, e.g. of Ethylene Vinyl Acetate or Polyethylene, and/or has a thickness of between 0.5 and 1.5 mm, preferably about 1 mm.
32.- Decorative panel according to any of numbered paragraphs 23 to 31, characterized in that said decorative top layer 9 comprises a printed film 26, preferably a rigid PVC film, e.g. having a thickness of 0.05 to 0.1 mm, and/or a transparent wear layer 27 comprising or being of plasticized poly vinyl chloride having a thickness between 0.2 and 0.77 mm, preferably about 0.3 mm or about 0.55 mm.
33.- Decorative panel according to any of numbered paragraphs 23 to 31, characterized in that
   - said second portion 11 has a thickness T2 of about 0.6 mm, and comprises 200 phr of filler material and 70 phr of plasticizer;
   - said first portion 10 has a thickness T1 of about 4 mm or about 3,75 mm, and comprises 225 phr of filler material and is foamed such that there is a density reduction as compared to an unfoamed identical material of 20 to 40%, preferably 25 to 35%;
   - said optional foamed layer 12 has a thickness of about 1 mm and is an open-cell foam;
   and in that said first portion 10 and said second portion 11 are provided on top of each other without glue or adhesive layers.
34.- Decorative panel according to any of numbered paragraphs 23 to 32, characterized in that said decorative panel 1 further shows the characteristics of any of numbered paragraphs 1 to 22.
35.- Method for manufacturing a decorative panel in accordance with any of the preceding numbered paragraphs, characterized in that said layers of said substrate 8 are obtained by means of an extrusion operation, preferably using two extruders and a single slot die 31, or using two extruders each feeding a respective slot die 31.

The present invention is in no way limited to the embodiments described by way of example and represented in the figures; on the contrary may decorative panels, extruded sheet materials and methods for their manufacture be realized according to various variants without leaving the scope of the invention.

## Claims

1. Decorative panel, **characterized in that** from top to bottom said decorative panel (1) comprises:
- a decorative top layer (9);
- a substrate (8) consisting of a first portion (10) and a second portion (11), said second portion (11) being a plasticized polyvinyl chloride layer, and said first portion (10) being a foamed less plasticized polyvinyl chloride layer;
- an optional foamed layer (12) provided by means of a glue (13) or adhesive layer to the bottom of said substrate (8).

2. Decorative panel according to claim 1, **characterized in that** said second portion has a thickness (T2) between 0.25 and 0.75 mm.

3. Decorative panel according to claim 1 or 2, **characterized in that** said second portion (11) comprises filler material, preferably particles of calcium carbonate, such as chalk, and/or particles of magnesium silicate, such as talc.

4. Decorative panel according to claim 3, **characterized in that** said second portion (11) comprises a filler material : polyvinyl chloride ratio of above 1.5:1, preferably about 2:1.

5. Decorative panel according to any of the preceding claims, **characterized in that** said second portion (11) comprises plasticizer in an amount of 25 phr or above, preferably 50 phr or above, or 65 phr or above, for example about 70 phr.

6. Decorative panel according to any of the preceding claims, **characterized in that** said first portion (10) comprises polyvinyl chloride and filler material, wherein the filler material : polyvinylchloride ratio is above 1.5:1, preferably about 2.25:1.

7. Decorative panel according to any of the preceding claims, **characterized in that** said first portion (10) is foamed and has a density that is at least 15%, or at least 20% lower than an identical unfoamed material, wherein the density is preferably higher than 60% or higher than 65% of an identical unfoamed material.

8. Decorative panel according to any of the preceding claims, **characterized in that** said first portion (10) has a thickness (T1) of between 3 and 5 mm, preferably about 4 mm or about 3,75 mm.

9. Decorative panel according to any of the preceding claims, **characterized in that** said optional foamed layer is an open cell foam, e.g. of Ethylene Vinyl Acetate or Polyethylene, and/or has a thickness of between 0.5 and 1.5 mm, preferably about 1 mm.

10. Decorative panel according to any of the preceding claims, **characterized in that** said decorative top layer (9) comprises a printed film (26), preferably a rigid PVC film, e.g. having a thickness of 0.05 to 0.1 mm, and/or a transparent wear layer (27) comprising or being of plasticized poly vinyl chloride having a thickness between 0.2 and 0.77 mm, preferably about 0.3 mm or about 0.55 mm.

11. Decorative panel according to any of the preceding claims, **characterized in that**
- said second portion (11) has a thickness (T2) of about 0.6 mm, and comprises 200 phr of filler material and 70 phr of plasticizer;
- said first portion (10) has a thickness (T1) of about 4 mm or about 3,75 mm, and comprises 225 phr of filler material and is foamed such that there is a density reduction as compared to an unfoamed identical material of 20 to 40%, preferably 25 to 35%;
- said optional foamed layer (12) has a thickness of about 1 mm and is an open-cell foam;
and **in that** said first portion (10) and said second portion (11) are provided on top of each other without glue or adhesive layers.

12. Method for manufacturing a decorative panel in accordance with any of the preceding claims, **characterized in that** said layers of said substrate (8) are obtained by means of an extrusion operation, preferably using two extruders and a single slot die (31), or using two extruders each feeding a respective slot die (31).
